Europäisches Patentamt

European Patent Office

Office européen des brevets

(19)

(11) Numéro de publication: **0 084 184 B1**

(12) **FASCICULE DE BREVET EUROPEEN**

(45) Date de publication du fascicule du brevet:
02.04.86

(21) Numéro de dépôt: **82200036.0**

(22) Date de dépôt: **14.01.82**

(51) Int. Cl.⁴: **H 02 K 7/08**, H 02 K 51/00

(54) **Moteur asynchrone pour traction ferroviaire.**

(43) Date de publication de la demande:
**27.07.83 Bulletin 83/30**

(45) Mention de la délivrance du brevet:
**02.04.86 Bulletin 86/14**

(84) Etats contractants désignés:
**AT BE CH DE FR GB IT LI LU NL SE**

(56) Documents cités:
**DE - C - 1 100 785
GB - A - 1 096 738
GB - A - 2 041 453
GB - A - 2 061 021
US - A - 4 235 216**

(73) Titulaire: **ATELIERS DE CONSTRUCTIONS
ELECTRIQUES DE CHARLEROI (ACEC) Société
Anonyme, Avenue Lloyd George 7, B-1050 Bruxelles (BE)**

(72) Inventeur: **Persyn, Raymond, Rue Vandervelde 31,
B-6160 Roux (BE)**

## Description

L'invention concerne un moteur asynchrone pour traction ferroviaire comprenant un pignon moteur disposé entre les deux paliers soutenant les extrémités de l'arbre.

En traction ferroviaire, l'utilisation du moteur asynchrone alimenté à fréquence variable se répand de plus en plus en raison des avantages importants qu'il offre sur le plan de l'entretien par rapport au moteur à courant continu.

Dans sa composition habituelle, le moteur asynchrone, utilisé en traction ferroviaire est muni d'un pignon monté en porte-à-faux sur le bout de l'arbre du moteur. Dans cette disposition, le roulement, faisant office de palier, situé près du pignon est très fortement sollicité à cause des efforts transmis par la denture conjugés à la vitesse de rotation élevée du moteur.

Ce roulement constitue le point faible des moteurs réalisés selon la conception habituelle lorsqu'on augmente la puissance de traction. En effet pour des puissances accrues le roulement disposé côté pignon n'atteint plus la durée de vie imposés au matériel roulant et plus particulièrement ne répond plus aux spécifications en vigueur dans les compagnies de chemin de fer.

Certains essais ont été tentés pour augmenter la durée de vie de ce roulement en améliorant les conditions de lubrification par brouillard d'huile mais ces tentatives n'ont pas apporté les améliorations souhaitées. De plus ces techniques de lubrification demandent des dispositif auxiliaires coûteux et réclamant une surveillance accrue. On connaît déjà un démarreur de voiture décrit dans le brevet US-A-4 235 216 constitué d'un moteur à courant continu dont l'arbre, soutenu à ses deux extrémités par des paliers lisses, est de grande longueur à cause de la présence du collecteur et des cannelures d'entraînement d'un pignon baladeur se déplaçant le long de ces cannelures. Une telle disposition est maladaptée à l'utilisation en traction ferroviaire car le taillage de cannelures dans l'arbre réduit la section résistante de celui-ci dans des proportions incompatibles avec la transmission d'un couple important et la grande longueur de l'arbre prise par rapport à la longueur axiale de la masse rotorique impose des flèches et des vitesses critiques intolérables pour un service continu du moteur.

Un autre démarreur décrit dans le brevet GB-A-2 041 453 présente un ensemble mécanique dans lequel le pignon baladeur se trouve sur un arbre de transmission parallèle à l'arbre moteur. Dans cette disposition, on retrouve un arbre moteur muni d'un collecteur et entaillé de cannelures qui présente les mêmes inconvénients que ceux précédemment signalés.

D'autre part, dans ces types de démarreurs, la lubrification du pignon moteur se fait à l'aide de graisse qui, centrifugée lors du démarrage, n'assure pas une lubrification suffisante pour un régime continu de fonctionnement.

La présente invention a pour but de remédier à ces inconvénients et propose un moteur asynchrone tel que décrit dans la revendication 1.

Une réalisation avantageuse de l'invention consiste à déporter le palier en bout d'arbre et à insérer entre la masse rotorique et le palier déporté le pignon moteur et une plaque de fermeture intérieure.

Les avantages obtenus grâce à cette invention consistent essentiellement en une réduction des efforts imposés au palier situé près du pignon moteur et une réduction des contraintes mécaniques sollicitant l'arbre. En outre cette disposition offre les avantages
- de choisir pour le palier déporté un roulement de diamètre plus petit pour mieux supporter les vitesses élevées du moteur
- de conserver au droit du pignon un grand diamètre d'arbre, apte à reprendre les efforts de denture
- d'obtenir une vitesse critique élevée
- d'assurer une lubrification efficace du pignon moteur par bain d'huile
- d'étendre la lubrification par bain d'huile au palier déporté.

L'invention est exposée plus en détail à l'aide des figures suivantes.

La figure 1 représente une vue en coupe du moteur asynchrone à palier déporté.

La figure 2 montre une coupe d'un autre exemple de réalisation.

Sur la fig. 1 le moteur asynchrone revendiqué dans l'invention comporte une carcasse 1, fermée à une extrémité par une flasque 2 et à l'autre extrémité par une plaque de fermeture intérieure 3 pour définir un volume fermé 4 contenant entr'autre une masse statorique 5.

Cette plaque de fermeture 3 se prolonge axialement par un support 6 constitué d'une buse centrale 7 et d'une séqie de goussets de renforcement 8. Un rotor 9 comprend une masse rotorique 10 solidaire d'un arbre 11 dont une extrémité 12 s'appuie sur un palier 13 constitué d'un roulement à rouleaux supporté par le flasque 2 et dont l'autre extrémité 14 s'appuie sur un autre palier 15 constitué d'un autre roulement à rouleaux soutenu par le support 6. Entre le palier 15, dit palier déporté, et la masse rotorique 10, l'arbre présente une partie troncoconique 16 sur laquelle est calée un pignon moteur 17 accessible de l'extérieur par une ouverture 18 s'étendant sur une partie de la circonférence de la buse centrale 7. La plaque de fermeture 3 supporte un disque 19 et une couronne 20 faisant l'un et l'autre office de labyrinthe pour empêcher le lubrifiant du pignon moteur 17 de s'introduire au-delà de la plaque de fermeture 3, dans le volume fermé 4.

Un disque déflecteur 21 centrifuge le lubrifiant qui, après avoir lubrifié le pignon moteur 17, est recueilli dans une gorge 22 pratiquée dans la partie inférieure de la buse centrale 7.

La fig. 2 montre un autre exemple de réalisation adapté plus spécialement à la traction ferroviaire.

Une fusée 24 adossée à la carcasse 2 est traversée de part en part par un axe 25 d'un essieu de chemin de fer et supporte une roue dentée 26 par l'intermédiaire de roulements 27. Cette roue dentée 26 porte sur une face des moyens de transmission de couple, non représentés, reliant élastiquement la roue dentée 26 et l'axe 25 de l'essieu.

Dans ces deux exemples de réalisation, le palier déporté 15 est lubrifié par l'huile du pignon moteur 17.

Il est évident que dans d'autres réalisations la lubrification du palier déporté 15 peut être indépendante de celle du pignon moteur 17. Les paliers 13 et 15 peuvent, selon les puissances mises en jeu, être équipés de roulements à rouleaux, à billes ou à aiguilles ou même être constitués de paliers lisses.

Toutefois dans l'application principale envisagée, relative à des moteurs asynchrones de traction dont la puissance dépasse 1000 KW, la solution la plus judicieuse consiste à utiliser un roulement à rouleaux pour équiper le palier déporté 15.

## Revendications

1. Moteur asynchrone pour traction ferroviaire dont l'arbre (11), soutenu à une extrémité (12) par un premier palier (13) centré sur la carcasse (1), supporte une masse rotorique (10) et un pignon moteur (17) fixés par frettage, l'autre extrémité (14) de l'arbre (11) est soutenue par un deuxième palier, appelé palier déporté (15) soutient l'autre extrémité (14) de l'arbre (11) et en ce que le pignon moteur (17) étant fixé sur l'arbre (11) entre la masse rotorique (10) et le palier déporté (15), au droit d'une partie tronconique (16) de l'arbre (11) offrant des caractéristiques mécaniques suffisantes pour transmettre des couples importants en service continu et pur éviter des flèches importantes ou des vitesses critiques gênantes.

2. Moteur asynchrone selon la revendication 1, caractérisé en ce qu'une fusée (24) parallèle à l'arbre (11) de la machine est adossée et solidarisée à la carcasse (1) et en ce que cette fusée (24) supporte une roue dentée (26) montée folle sur la fusée (24).

3. Moteur asynchrone selon une des revendications précédentes, caractérisé en ce que le palier déporté (15) est intégré à un support (6) faisant office de réservoir pour le lubrifiant du pignon moteur (17) ouvert vers le haut sur une longueur axiale comparable au moins à la largeur du pignon moteur (17) et centré sur la carcasse (1) à l'aide d'une plaque de fermeture intérieure (3) équipée de moyens d'étanchéité, coaxiaux à l'arbre (11), qui empêchent le lubrifiant du pignon moteur (17) de pénètrer au delà de la plaque de fermeture (3).

4. Moteur asynchrone selon la revendication 3, caractérisé en ce que les moyens d'étanchéité, coaxiaux à l'arbre (11), qui empêchent le lubrifiant de pénètrer au delà de la plaque de fermeture (3) sont constitués d'un labyrinthe formé d'un disque (19) solidaire de la plaque de fermeture (3) et d'une couronne (20) solidaire de l'arbre (11).

5. Moteur asynchrone selon la revendication 3, caractérisé en ce que le lubrifiant est centrifugé par un disque déflecteur (21) monté entre le pignon moteur (17) et la couronne (20) du labyrinthe et recueilli dans une gorge (22) située dans la partie inférieure de buse centrale (7).

6. Moteur asynchrone selon la revendication 3, caractérisé en ce que le palier déporté (15) est lubrifié par le bain d'huile du pignon moteur (17).

7. Moteur asynchrone selon la revendication 2, caractérisé en ce que la fusée (24) est d'un diamètre suffisamment grand pour permettre le passage d'un arbre (25) d'un essieu de chemin de fer.

8. Moteur asynchrone selon la revendication 2, caractérisé en ce que la roue dentée (20) porte sur une face des moyens d'entraînement de l'arbre (25) de l'essieu de chemin de fer.

9. Moteur asynchrone selon la revendication 1, caractérisé en ce que les paliers (13 et 15) supportent l'arbre (11) du moteur sont constitués par des roulement à rouleaux.

## Patentansprüche

1. Asynchrontraktionsmotor, dessen Welle (11), die an einem Ende (12) von einem auf dem Gehäuse (1) zentrisch angeordneten ersten Wellenlager (13) gehalten wird, eine Rotormasse (10) und ein Antriebsritzel (17) trägt, die durch Aufschrumpfen befestigt sind, wobei das andere Ende (14) der Welle (11) von einem zweiten Wellenlager gehalten wird, das verschobenes Wellenlager (15) genannt wird, und das Antriebsritzel (17) auf der Welle (11) zwischen der Rotormasse (10) und dem verschobenen Wellenlager (15) befestigt ist, am Ort eines kegelstumpfförmigen Abschnitts (16) der Welle (11), der ausreichende mechanische Eigenschaften aufweist, um bei kontinuierlichem Betrieb bedeutende Drehmomente zu übertragen, und um starke Durchbiegungen oder störende kritische Drehzahlen zu vermeiden.

2. Asynchronmotor gemäss Anspruch 1, dadurch gekennzeichnet, dass ein zu der Welle (11) der Maschine paralleler Achsschenkel (24) an das Gehäuse (1) angebaut und mit diesem fest verbunden ist, und dass dieser Achsschenkel (24) ein auf dem Achsschenkel (24) beweglich montiertes Zahnrad (26) trägt.

3. Asynchronmotor gemäss einem der vorhergehenden Ansprüche, dadurch gekennzeichnet, dass das verschobene Wellenlager (15) in eine Halterung (6) eingebaut ist, die als Vorratsbehälter für das Schmiermittel des Antriebsritzels (17) dient, und über eine mindestens mit der Breite des Antriebsritzels (17) vergleichbare Länge nach oben offen ist und auf dem Gehäuse (1) mit Hilfe einer inneren Verschlussplatte (3) zentrisch angeordnet ist, die mit zu der Welle (11) koaxialen Abdichtungsmitteln ausgerüstet ist, die verhindern, dass das Schmiermittel des Antriebsritzels (17) weiter als bis zu der Verschlussplatte (3) eindringt.

4. Asynchronmotor gemäss Anspruch 3, dadurch gekennzeichnet, dass die zu der Welle (11) koaxialen Abdichtungsmittel, die verhindern, dass das Schmiermittel weiter als bis zu der Verschlussplatte (3) eindringt, aus einem Labyrinth bestehen, das von einer mit der Verschlussplatte (3) fest verbundenen Scheibe (19) und einem mit der Welle (11) fest verbundenen Kranz (20) besteht.

5. Asynchronmotor gemäss Anspruch 3, dadurch gekennzeichnet, dass das Schmiermittel durch eine zwischen dem Antriebsritzel (17) und dem Kranz (20) des Labyrinths angeordnete Ablenkscheibe (21) zentrifugiert wird, und in einer in dem unteren Teil der zentralen Buchse (7) gelegenen Rille (22) gesammelt wird.

6. Asynchronmotor gemäss Anspruch 3, dadurch gekennzeichnet, dass das verschobene Lager (15) durch das Ölbad des Antriebsritzels (17) geschmiert wird.

7. Asynchronmotor gemäss Anspruch 2, dadurch gekennzeichnet, dass der Achsschenkel (24) einen genügend grossen Durchmesser aufweist, um die Durchführung einer Eisenbahnachse (25) zu gestatten.

8. Asynchronmotor gemäss Anspruch 2, dadurch gekennzeichnet, dass das Zahnrad (20) auf einer Seite Mittel zum Antrieb der Eisenbahnachse (25) aufweist.

9. Asynchronmotor gemäss Anspruch 1, dadurch gekennzeichnet, dass die Wellenlager (13 und 15), die die Welle (11) des Motors tragen, aus Rollenlagern bestehen.

## Claims

1. Asynchronous motor for railway traction use, whose shaft (11), supported at one end (12) by a first bearing (13) centred on the casing (1), supports a rotor body (10) and a driving pinion (17) fixed by hoopsecuring, the other end (14) of the shaft (11) being supported by a second bearing referred to as the offset bearing (15), the driving pinion (17) being fixed on the shaft (11) between the rotor body (10) and the offset bearing (15), straight above a frustoconical portion (16) of the shaft (11) offering sufficient mechanical characteristics for transmitting considerable torques in continuous service and for obviating considerable deflections or hindrance-constituting critical speeds.

2. Asynchronous motor according to claim 1, characterised in that a journal element (24) parallel to the shaft (11) of the machine is placed on and connected integrally with the casing (1), and in that this journal element (24) supports a toothed wheel (26) mounted freely on the journal element (24).

3. Asynchronous motor according to one of the preceding claims, characterised in that the offset bearing (15) is integrated with a support (6) acting as a reservoir for the lubricant of the driving pinion (17) open upwardly over an axial length comparable at least to the width of the driving pinion (17) and centred on the casing (1) by means of an internal closure plate (3) equipped with sealing means which are coaxial with the shaft (11) and which prevent the lubricant of the driving pinion (17) from penetrating beyond the closure plate (3).

4. Asynchronous motor according to claim 3, characterised in that the sealing means which are coaxial with the shaft (11) and which prevent the lubricant from penetrating beyond the closure plate (3) are constituted by a labyrinth formed of a disc (19) integral with the closure plate (3) and of an annulus (20) integral with the shaft (11).

5. Asynchronous motor according to claim 3, characterised in that the lubricant is centrifuged by a deflector disc (21) mounted between the driving pinion (17) and the annulus (20) of the labyrinth, and collected in a groove (22) situated in the lower portion of the central nose (7).

6. Asynchronous motor according to claim 3, characterised in that the offset bearing (15) is lubricated by the oil bath of the driving pinion (17).

7. Asynchronous motor according to claim 2, characterised in that the journal element (24) is of a sufficiently large diameter to allow the passage of a shaft (25) of a railway axle.

8. Asynchronous motor according to claim 2, characterised in that the toothed wheel (20) at one face comprises drive means of the shaft (25) of the railway axle.

9. Asynchronous motor according to claim 1, characterised in that the bearings (13 and 15) supporting the shaft (11) of the motor are constituted by roller bearings.